# EUROPÄISCHE PATENTSCHRIFT

(11) **EP 1 272 403 B1**
(45) Veröffentlichungstag und Bekanntmachung des Hinweises auf die Patenterteilung: **14.07.2004**
(21) Anmeldenummer: 01911747.2
(22) Anmeldetag: 07.03.2001
(51) Int. Cl.: B65D 90/46, B60K 15/03, B29C 49/22, B29C 49/24, B65D 25/38

(54) **BLASGEFORMTE BEHÄLTER UND FORMTEILE AUS KUNSTSTOFF MIT VERBESSERTER ANTISTATIK**
BLOW MOULDED CONTAINERS AND MOULDED PARTS CONSISTING OF SYNTHETIC MATERIAL AND HAVING IMPROVED ANTISTATIC PROPERTIES
CONTENANTS ET PIECES EN MATIERE PLASTIQUE MOULES PAR SOUFFLAGE PRESENTANT DES PROPRIETES ANTISTATIQUES AMELIOREES

(30) Priorität: 16.03.2000 DE 10013000
(43) Veröffentlichungstag der Anmeldung: 08.01.2003
(73) Patentinhaber: Basell Polyolefine GmbH, 50389 Wesseling (DE)
(72) Erfinder: SPRINGHOLZ, Bernhard, 67547 Worms (DE); ROHDE, Wolfgang, 67346 Speyer (DE); HAUFE, Andreas, 67069 Ludwigshafen (DE)
(86) Internationale Anmeldenummer: PCT/EP2001/002558
(87) Internationale Veröffentlichungsnummer: WO 2001/068480

(56) Entgegenhaltungen:
- EP-A- 0 014 491
- DE-U- 29 719 911
- PATENT ABSTRACTS OF JAPAN vol. 009, no. 003 (M-349), 9. Januar 1985 (1985-01-09) -& JP 59 153620 A (MAZDA KK), 1. September 1984 (1984-09-01)

## Beschreibung

Die vorliegende Erfindung betrifft Behälter oder Formteile aus Kunststoff, die nach dem Blasformverfahren hergestellt sind und die verbesserte antistatische Eigenschaften besitzen( siehe zum Beispiel DE 297 19 911 U).

Sowohl verschiedene Bauteile an Kraftfahrzeugen als auch Behälter für bestimmte Füllstoffe oder Einsatzorte müssen bei ihrem bestimmungsgemäßen Einsatzzweck bestimmte antistatische Eigenschaften besitzen, um möglichen Explosionsgefahren entgegenzuwirken. Kunststoffteile und Behälter aus Kunststoff haben hierin einen Nachteil gegenüber Metallteilen, da der Kunststoff als solcher den elektrischen Strom nicht leitet und deshalb an Oberflächen entstehende elektrische Aufladungen nicht ableiten kann, was bei Metallen wegen deren elektrischer Leitfähigkeit kein Problem ist. Alle bisher üblichen Maßnahmen zur Verbesserung der antistatischen Eigenschaften von Bauteilen aus Kunststoff sind mit Nachteilen in anderen Bereichen verbunden.

Antistatika, die Kunststoffen als Additiv zugesetzt werden, wirken nur in Verbindung mit Feuchtigkeit an den Oberflächen der Kunststoffwände. Sie wirken nicht, wenn keine Feuchtigkeit an die Wand gelangt und sie bergen die Gefahr in sich, durch Diffusion in das Füllgut überzugehen und dieses zu kontaminieren.

Ein bekanntes Hilfsmittel um beispielsweise Tank-Einfüllstutzen aus Kunststoff antistatisch zu gestalten, besteht aus einer Drahtspeiche, die in den Stutzen aus Kunststoff eingehängt wird. Sie ist mit dem Tankverschluß und damit mit der Karosserie aus Metall verbunden und dadurch kann eventuell auftretende elektrische Ladung abfließen. Probleme bestehen bei dieser Vorgehensweise im zeitaufwändigen nachträglichen Verlegen der Metallspeiche in dem ansonsten komplett aus Kunststoff bestehenden und im kunststofftechnischen Fügeverfahren zusammengebauten Tank-Einfüllstutzen-System.

Eine andere Variante besteht darin, den Einfüllstutzen aus mit elektrisch leitfähigem Ruß hochgefülltem Kunststoff herzustellen. Dadurch wird die Kunststoffwand selbst leitfähig. Hierbei bestehen Probleme in der durch den hohen Füllgrad verringerten Zähigkeit des Kunststoffs, die sich in einer verschlechterten Schlagzähigkeit des Einfüllstutzens niederschlagen.

Entsprechende mit Ruß gefüllte Materialtypen werden zur Herstellung antistatischer Kanister benutzt. Probleme bereiten neben der verringerten Schockfestigkeit auch die schlechtere Verschweißbarkeit des Materials, die bei den typischerweise im Blasformverfahren hergestellten Kanistern zu schlechten Quetschnahtfestigkeiten führt. Das Gleiche gilt bei coextrudierten Behältern mit leitfähiger Innenschicht, bei denen typischerweise ebenfalls die Quetschnaht aus Material der Innenschicht gebildet wird.

Speziell bei sogenannten Intermediate Bulk Containern (IBCs), das sind großvolumige Behälter, die aus einem inneren Kunststoffbehälter und einer äußeren Stützvorrichtung, meist aus Metall, bestehen und die für den Transport und die Lagerung von flüssigen oder pulverförmigen Chemikalien verwendet werden, werden antistatische Eigenschaften durch einen besonders engen Kontakt des Kunststoffs mit MetallOberflächen oder äußeres Beschichten mit einem leitfähigen Material erzeugt. Probleme dabei bestehen aber in dem hohen Materialaufwand und/oder zusätzlich notwendigen Arbeitsschritten während der Fertigung.

Die Aufgabe der vorliegenden Erfindung bestand deshalb darin, Kunststoffteile oder Behälter aus Kunststoff mit verbesserten antistatischen Eigenschaften bereitzustellen, die einfach und wirtschaftlich in einem Schritt herzustellen sind, die aber keine oder nur geringfügige Einbußen in ihren mechanischen Eigenschaften zeigen.

Diese Aufgabe wird erfindungsgemäß durch Behälter oder Formteile der eingangs genannten Gattung gelöst, deren Kennzeichenmerkmale darin zu sehen sind, dass die Behälter oder Formteile eine Außenwand und eine Innenwand aufweisen und dass die Behälter oder Formteile an der Innenwand verlaufende Bahnen aus elektrisch leitfähigem thermoplastischen Material enthalten.

Als elektrisch leitfähige Materialien kommen erfindungsgemäß solche Materialien in Frage, die einen spezifischen elektrischen Durchgangswiderstand von maximal 10⁶ Ohm·cm (Ω·cm), vorzugsweise von maximal 10⁵ Ω·cm, besitzen. Derartige Materialien sind Metalle in jeder Form oder mit Metallspänen oder Metallfäden oder Kohlenstofffasem oder leitfähigem Ruß in ausreichender Menge gefüllte selbst nicht leitfähige Kunststoffe oder intrinsisch elektrisch leitfähige Kunststoffe wie substituierte Polythiophene oder ähnliche Polymere mit konjugierten Doppelbindungen.

Der Verlauf der Bahnen auf der Innenwand der erfindungsgemäßen Behälter oder Formteile kann variabel gestaltet werden. Die Bahnen können beispielsweise kreuzweise in Form von Netzwerken verlaufen oder sie können parallel angeordnet sein. Bei parallelem Verlauf der Bahnen soll der maximale Abstand zwischen den einzelnen Bahnen 20 mm, vorzugsweise 15 mm, nicht überschreiten. Bei kreuzweisem Verlauf der Bahnen sollte die maximale zusammenhängende, nicht leitfähige Gitterfläche eine Größe von 100 cm² nicht überschreiten, vorzugsweise von 80 cm². Die Gesamtfläche der Innenwand der erfindungsgemäßen Behälter oder Formteile, die von den Bahnen aus elektrisch leitfähigem Material bedeckt ist, sollte mindestens 10 % betragen, bezogen auf die gesamte Fläche der Innenwand, vorzugsweise mindestens 20 %.

Als Kunststoff für die erfindungsgemäßen Behälter oder Formteile werden Polyolefine eingesetzt, die aus Monomeren mit 2 bis 10 C-Atomen durch Polymerisation erhalten werden. Die Polymerisation kann alternativ im bekannten Gasphasenverfahren, in Hochdruckreaktoren, in Loop-Reaktoren oder im Slurry-Verfahren in Gegenwart von geeigneten Polymerisationskatalysatoren erfolgen. Vorzugsweise wird als Kunststoff für die erfindungsgemäßen Behälter oder Formteile Polyethylen eingesetzt, wobei im Rahmen der vorliegenden Erfindung unter dem Begriff Polyethylen sowohl Homopolymere wie Copolymere von Ethylen mit anderen Olefinen mit 3 bis 10 C-Atomen zu verstehen sein sollen. Das Polyethylen kann hohe (HDPE), mittlere (MDPE) oder niedrige (LDPE) Dichte haben und es kann linear (LLDPE) oder verzweigt sein.

Die Bahnen aus elektrisch leitfähigem Material werden während der Herstellung der erfindungsgemäßen Behalter oder Formteile während des Ausstoßvorgangs der Kunststoffschmelze aus dem Extruder in die Blasform in einem modifizierten Coextrusionsverfahren direkt auf die Innenwand des Vorformlings aufgebracht und mit dem Vorformling zusammen zum fertigen Behälter oder Formteil aufgeblasen. Dabei wird darauf geachtet, dass die Lage der Bahnen in Extrusionsrichtung und am Umfang des Formteils so gesteuert wird, dass die Bahnen möglichst nicht durch Quetschnähte verlaufen und in Quetschnähten möglichst nicht aufeinandertreffen.

Die Umfangslage der Bahnen aus elektrisch leitfähigem Material wird durch einen entsprechend gestalteten Kopf-Düse-Bereich der Blasformmaschine gesteuert, während die Lage der Bahnen aus elektrisch leitfähigem Material in Extrusionsrichtung durch sequentielle diskontinuierliche Extrusion der Bahnschichten beeinflusst werden kann.

Die Erfindung ist bevorzugt geeignet, um antistatisch ausgerüstete Behälter wie Flaschen, Kanister, Fässer, IBCs oder technische Formteile wie Kraftstoffkanister aus Kunststoff oder Einfüllstutzen für Kraftstoffbehälter in Kraftfahrzeugen herzustellen.

Der Vorteil der erfindungsgemäßen Behälter oder Formteile liegt darin, dass die Bahnen aus elektrisch leitfähigem Material keine migrierenden Additive enthalten, dass die Bahnen direkt während des Formprozesses in einem Schritt und ohne Nachbearbeitung in den Behälter oder das Formteil eingebracht werden und dass die Bahnen nicht oder kaum in die Quetschnaht hinein reichen, so dass keine oder nur eine ganz geringfügige mechanische Schwächung des Behälters oder Formteils durch die antistatische Ausrüstung verursacht wird.

## Patentansprüche

1. Behälter oder Formteile aus Kunststoff, die nach dem Blasformverfahren hergestellt sind und die verbesserte antistatische Eigenschaften besitzen, **dadurch gekennzeichnet, dass** die Behälter oder Formteile eine Außenwand und eine Innenwand aufweisen und dass die Behälter oder Formteile an der Innenwand verlaufende Bahnen aus elektrisch leitfähige thermoplastischem Material enthalten.

2. Behälter oder Formteile nach Anspruch 1, **dadurch gekennzeichnet, dass** sie als elektrisch leitfähige Materialien solche Materialien enthalten, die einen spezifischen elektrischen Durchgangswiderstand von maximal 10⁶ Ω·cm, vorzugsweise von maximal 10⁵ Ω·cm, besitzen.

3. Behälter oder Formteile nach Anspruch 1 oder 2, **dadurch gekennzeichnet, dass** sie als elektrisch leitfähige Materialien mit Metallspänen oder Metallfäden oder Kohlenstofffasem oder leitfähigem Ruß in ausreichender Menge gefüllte selbst nicht leitfähige Kunststoffe oder intrinsisch elektrisch leitfähige Kunststoffe wie substituierte Polythiophene oder andere Polymere mit konjugierten Doppelbindungen enthalten.

4. Behälter oder Formteile nach einem der Ansprüche 1 bis 3, **dadurch gekennzeichnet, dass** die Bahnen auf der Innenwand der Behälter oder Formteile kreuzweise in Form von Netzwerken oder parallel angeordnet sind, wobei der maximale Abstand zwischen den einzelnen parallelen Bahnen 20 mm, vorzugsweise maximal 15 mm, beträgt.

5. Behälter oder Formteile nach einem der Ansprüche 1 bis 4 **dadurch gekennzeichnet, dass** bei kreuzweisem Verlauf der Bahnen die maximale zusammenhängende, nicht elektrisch leitfähige Gitterfläche eine Größe von 100 cm², vorzugsweise von 80 cm², nicht überschreitet.

6. Behälter oder Formteile nach einem der Ansprüche 1 bis 5, **dadurch gekennzeichnet, dass** die Gesamtfläche der Innenwand der Behälter oder Formteile, die von den Bahnen aus elektrisch leitfähigem Material bedeckt ist, mindestens 10 % beträgt, bezogen auf die gesamte Fläche der Innenwand, vorzugsweise mindestens 20 %.

7. Behälter oder Formteile nach einem der Ansprüche 1 bis 6, **dadurch gekennzeichnet, dass** als Kunststoff Polyolefine eingesetzt werden, die aus Monomeren mit 2 bis 10 C-Atomen durch Polymerisation erhalten werden, wobei die Polymerisation im Gasphasenverfahren, in Hochdruckreaktoren, in Loop-Reaktoren oder im Slurry-Verfahren in Gegenwart von geeigneten Polymerisationskatalysatoren erfolgen kann, vorzugsweise Polyethylen.

8. Verfahren zum Herstellen von Behältern oder Formteilen nach einem der Ansprüche 1 bis 7, bei dem der Kunststoff zunächst in einem Extruder aufgeschmolzen, dann in schmelzflüssigem Zustand zu einem Vorformling in eine Blasform ausgestoßen und dann durch Druckluft aufgeblasen und abgekühlt wird, **dadurch gekennzeichnet, dass** die Bahnen aus elektrisch leitfähigem Material während des Ausstoßvorgangs der Kunststoffschmelze aus dem Extruder in die Blasform in einem modifizierten Coextrusionsverfahren direkt auf die Innenwand des Vorformlings aufgebracht und mit dem Vorformling zusammen zum fertigen Behälter oder Formteil aufgeblasen werden.

9. Verfahren nach Anspruch 8 **dadurch gekennzeichnet, dass** die Lage der Bahnen in Extrusionsrichtung und am Umfang des Formteils so gesteuert wird, dass die Bahnen nicht durch Quetschnähte verlaufen oder in Quetschnähten nicht aufeinandertreffen.

10. Verwendung von Behältern oder Formteilen nach einem der Ansprüche 1 bis 7 für antistatisch ausgerüstete Behälter wie Flaschen, Kanister, Fässer, IBCs oder technische Formteile wie Kraftstoffkanister aus Kunststoff oder Einfüllstutzen für Kraftstoffbehälter in Kraftfahrzeugen.

## Claims

1. Plastic containers or mouldings which have been produced by blow moulding and have improved antistatic properties, **characterized in that** the containers or mouldings have an outer wall and an inner wall, and **in that** the containers or mouldings contain webs of electrically conductive thermoplastic material running along the inner wall.

2. Containers or mouldings according to claim 1, **characterized in that** they contain, as electrically conducting materials, materials which have a specific electrical volume resistance of at most 10⁶ Ω·cm, preferably at most 10⁵ Ω·cm.

3. Containers or mouldings according to claim 1 or 2, **characterized in that** they contain, as electrically conducting materials, intrinsically non-conducting plastics which are filled with metal turnings or metal filaments or carbon fibres or conductive carbon black in sufficient amount or intrinsically electrically conducting plastics, such as substituted polythiophenes or other polymers having conjugated double bonds.

4. Containers or mouldings according to one of claims 1 to 3, **characterized in that** the webs are arranged on the inner wall of the containers or mouldings crosswise in the form of networks or in parallel, where the maximum separation between the individual parallel webs is 20 mm, preferably at most 15 mm.

5. Containers or mouldings according to one of claims 1 to 4, **characterized in that**, in the case of crosswise running of the webs, the maximum coherent, non-electrically conducting grid area does not exceed a size of 100 cm², preferably 80 cm².

6. Containers or mouldings according to one of claims 1 to 5, **characterized in that** the total area of the inner wall of the containers or mouldings which is covered by the webs of electrically conducting material is at least 10%, preferably at least 20%, based on the total area of the inner wall.

7. Containers or mouldings according to one of claims 1 to 6, **characterized in that** the plastics employed are polyolefins obtained by polymerization of monomers having from 2 to 10 carbon atoms, where the polymerization can be carried out by the gas-phase process, in high-pressure reactors, in loop reactors or by the slurry process in the presence of suitable polymerization catalysts, preferably polyethylene.

8. Process for the production of containers or mouldings according to one of claims 1 to 7, in which the plastic is firstly melted in an extruder, then discharged in the molten state into a blow mould to give a parison, and then inflated by compressed air and cooled, **characterized in that** the webs of electrically conducting material are applied directly to the inner wall of the parison during discharge of the plastic melt from the extruder into the blow mould in a modified coextrusion process and are inflated together with the parison to form the finished container or moulding.

9. Process according to claim 8, **characterized in that** the position of the webs in the extrusion direction and at the periphery of the moulding is controlled in such a way that the webs do not run through pinch-off welds or meet one another in pinch-off welds.

10. Use of containers or mouldings according to one of claims 1 to 7 for antistatically finished containers, such as bottles, canisters, drums, IBCs, or industrial mouldings, such as fuel canisters made of plastic or fill necks for fuel tanks in motor vehicles.

## Revendications

1. Récipients ou pièces moulées de matière plastique, fabriqués selon le procédé de moulage par extrusion-soufflage et qui possèdent des propriétés antistatiques améliorées, **caractérisés en ce que** les récipients ou les pièces moulées de matière plastique présentent une paroi externe et une paroi interne et que les récipients ou les pièces moulées de matière plastique contiennent des bandes de matière conductrice thermoplastique déposées sur la paroi interne.

2. Récipients ou pièces moulées de matière plastique selon la revendication 1, **caractérisés en ce qu'**ils contiennent, en tant que matières conductrices, des matières présentant une résistance transversale spécifique d'au maximum 10⁶ Ohm·cm (Ω·cm), de préférence d'au maximum 10⁵ Ω·cm.

3. Récipients ou pièces moulées de matière plastique selon la revendication 1 ou 2, **caractérisés en ce qu'**ils contiennent, en tant que matières conductrices, des matières plastiques non conductrices en elles-mêmes chargées avec une quantité suffisante de copeaux métalliques ou de fils métalliques ou de fibres de carbone ou de suie conductrice ou des matières plastiques intrinsèquement électro-conductrices telles que les polythiophènes substitués ou les polymères similaires présentant des doubles liaisons conjuguées.

4. Récipients ou pièces moulées de matière plastique selon l'une quelconque des revendications 1 à 3, **caractérisés en ce que** les bandes sont disposées sur la paroi interne des récipients ou des pièces moulées selon une disposition croisée sous forme de réseaux ou bien elles sont disposées en parallèle, la distance maximale entre les bandes individuelles étant de 20 mm, de préférence d'au maximum 15 mm.

5. Récipients ou pièces moulées de matière plastique selon l'une quelconque des revendications 1 à 4, **caractérisés en ce que**, dans le cas de la disposition croisée des bandes, la surface maximale du treillis non électro-conducteur ne dépasse pas 100 cm², de préférence 80 cm².

6. Récipients ou pièces moulées de matière plastique selon l'une quelconque des revendications 1 à 5, **caractérisés en ce que** la surface totale de la paroi interne des récipients ou des pièces moulées qui est recouverte de bandes de matière conductrice, représente au moins 10% de la surface totale de la paroi interne, de préférence au moins 20%.

7. Récipients ou pièces moulées de matière plastique selon l'une quelconque des revendications 1 à 6, **caractérisés en ce que** l'on met en oeuvre, en tant que matière plastique, des polyoléfines que l'on obtient au moyen d'une polymérisation à partir de monomères possédant 2 à 10 atomes de C, la polymérisation pouvant être réalisée dans des réacteurs sous pression, dans des réacteurs en boucle ou selon le procédé en suspension en présence de catalyseurs de polymérisation appropriés, de préférence polyéthylène.

8. Procédé de fabrication de récipients ou de pièces moulées de matière plastique selon l'une quelconque des revendications 1 à 7, dans lequel on fait d'abord fondre la matière plastique dans une extrudeuse, puis on l'expulse à l'état de masse fondue pour former une paraison et on la gonfle ensuite à l'air comprimé et on la refroidit, **caractérisé en ce que** l'on dépose les bandes de matière conductrice pendant la phase d'expulsion de la masse fondue de matière plastique hors de l'extrudeuse dans le moule de soufflage selon un procédé de coextrusion modifié, directement sur la paroi interne de la paraison et qu'on les gonfle conjointement avec la paraison pour former le récipient ou la pièce moulée fini.

9. Procédé selon la revendication 8, **caractérisé en ce que** l'on dirige le positionnement des bandes dans la direction de l'extrusion et sur la périphérie de la pièce moulée de façon à éviter que les bandes traversent les soudures obtenues par écrasement et se rejoignent dans les soudures obtenues par écrasement.

10. Utilisation de récipients ou de pièces moulées selon l'une quelconque des revendications 1 à 7 pour des récipients rendus antistatiques tels que des bouteilles, des bidons, des barils, des GRV ou des pièces moulées techniques telles que les bidons de carburant de matière plastique ou les goulottes de remplissage pour les réservoirs de carburant dans les automobiles.
